# EUROPEAN PATENT SPECIFICATION

(11) **EP 1 592 241 B1**
(45) Date of publication and mention of the grant of the patent: **21.02.2007**
(21) Application number: 05252638.1
(22) Date of filing: 27.04.2005
(51) Int. Cl.: H04N 5/782

(54) **Communication satellite (CS) digital broadcast receiver**
Digitalrundfunkempfänger für Nachrichtensatelliten
Récepteur de radiodiffusion numérique pour satellite de télécommunications

(30) Priority: 28.04.2004 JP 2004134102
(43) Date of publication of application: 02.11.2005
(73) Proprietor: ORION ELECTRIC CO., Ltd., Takefu-City, Fukui 915-8555 (JP)
(72) Inventor: Nakakura, Toshihiro, c/o Intell. Property Dept., Takefu-city Fukui 915-8555 (JP)
(74) Representative: Paget, Hugh Charles Edward

(56) References cited:
- EP-A- 1 198 130
- US-A- 5 477 279
- US-A1- 2002 129 287
- US-A1- 2003 159 151
- US-B1- 6 704 063

## Description

### BACKGROUND OF THE INVENTION

### Field of the Invention

The present invention relates to a CS (Communication Satellite) digital broadcast receiver (Set Top Box) for receiving BS and CS broadcasts, and relates in particular to a CS digital broadcast receiver (Set Top Box) provided with a programming function to record on the recording means for programmed recording wherein the recording does not start in the standby mode for programmed recording.

### Description of the Related Art

CS digital broadcast receivers (Set Top Boxes) for BS and CS broadcasts to receive television broadcasts different from ground-based broadcasts are known in the prior art. In order to record broadcasts received by a CS digital broadcast receiver, a recording means, such as an analog video recorder, a digital video recorder, and a hard disk, can be used to record video and audio signals output from a CS digital broadcast receiver. To do so, an external input terminal of the recording means is used to record externally input audio/video signals. In order to record such television programs using a timer, both the CS digital broadcast receiver and the recording means must have their timers set, requiring a cumbersome operation.

As a technique to resolve the problem, Patent Document 1 proposes a CS digital broadcast receiver in which recording starts when the digital broadcast receiver is turned ON and ends when the digital broadcast receiver is turned OFF.

### [Patent Document 1]

Japanese Laid-Open Patent Application No. 2001-257951.

### SUMMARY OF THE INVENTION

However, the CS digital broadcast receiver disclosed in Patent Document 1 operates in a so-called simple recording mode, in which recording starts when the CS digital broadcast receiver is turned ON. The recording means starts recording in association with turning on the power of the CS digital broadcast receiver, provided that the CS digital broadcast receiver having the timer set for recording is also turned ON. However, the recording also starts when the CS digital broadcast receiver is turned ON by the viewer to watch in the standby mode for programmed recording, resulting in the recording of undesired programs.

The present invention is proposed in view of the above problem and has the objective of providing a CS digital broadcast receiver in which an audio/video recording device does not start recording when the CS digital broadcast receiver is turned ON by the user, thereby preventing accidental recording.

The CS digital broadcast receiver according to the present invention is set out in claim 1.

In the CS digital broadcast receiver according to the present invention, preferably, the recording means is provided with a simple recording mode in which audio/video signals supplied from the tuner are recorded in association with turning ON the power of the CS digital broadcast receiver, the CS digital broadcast receiver being provided with means to select whether or not to correspond with a simple recording mode.

In the CS digital broadcast receiver according to the present invention audio/video signals of programs received by the tuner are not supplied to the recording means in "the programmed mode". Therefore, programs received by the tuner are not recorded by the recording means even if the CS digital broadcast receiver is turned ON. Audio/video signals of programs from the tuner are supplied to the external output terminal connected to the monitor in the standby mode. Therefore, programs received by the tuner can be viewed and channels and broadcasts can be switched over.

In the CS digital broadcast receiver according to Claim 2 the recording means is provided with the simple recording mode, and the CS digital broadcast receiver is provided with a function to select whether or not it corresponds with the simple recording mode. For example, when weekly or daily recordings are programmed and no selection is made corresponding to the "simple recording mode", current audio/video signals are supplied to the external output terminal connected to the recording means, and current audio/video signals are easily recorded without canceling the programmed recording. When selection is made corresponding to the "simple recording mode", nothing is supplied to the external terminal even if the power is turned ON for other programming after the programmed recording is complete. Thus, recording can be easily programmed without canceling the simple programming of the recording means.

### BRIEF DESCRIPTION OF THE DRAWINGS

Fig.1 is a block diagram showing the internal configuration of the CS digital broadcast receiver of the present invention.
Fig.2 is a block diagram showing the connection of the CS digital broadcast receiver and external devices; same as the above.
Fig.3 is a flowchart showing the recording operation; same as the above.
Fig.4 is a flowchart showing the recording operation; same as the above.
Fig.5 is a flowchart showing the recording operation based on the simple programming; same as the above.
Fig.6 is a flowchart showing the recording operation based on the simple programming; same as the above.

### DETAILED DESCRIPTION OF THE PREFERRED EMBODIMENTS

A preferred embodiment of the present invention is described hereafter with reference to the attached drawings.

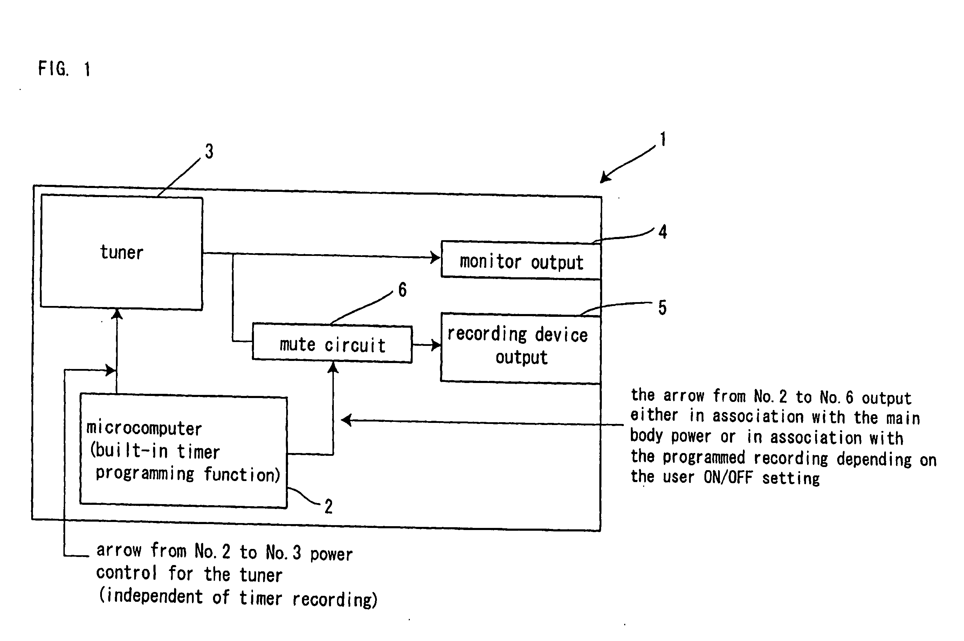

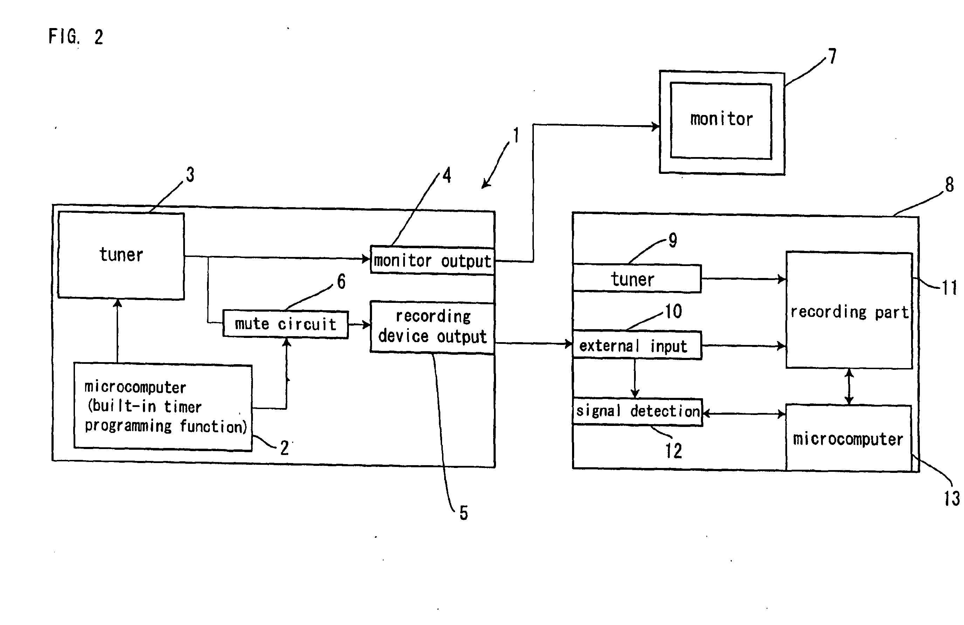

Fig.1 is a block diagram showing the internal configuration of the CS digital broadcast receiver of the present invention and Fig.2 is a block diagram showing the connection of external devices. A CS digital broadcast receiver 1 comprises a microcomputer or a control means 2, a tuner 3, multiple external output terminals 4 and 5, and a mute circuit 6. External output terminals 4 and 5 are connected to a monitor 7 and a recording means 8, such as an analog video recorder, a digital video recorder, and a hard disk, respectively. The recording means 8 comprises a tuner 9 for receiving ground-based broadcasts, an external input terminal 10 for connecting to the CS digital broadcast receiver 1, and a recorder 11 for recording video signals supplied from the tuner 3 of the CS digital broadcast receiver 1 via the tuner 9 and external input terminal 10. The external input terminal 10 comprises a signal detector 12 for detecting video signals of the CS digital broadcast receiver 1 supplied to the external input terminal 10 and a microcomputer 13 for controlling the recorder 11 based on signals from the signal detector 12. Microcomputer 13 activates the recorder 11 in association with turning ON the power of the CS digital broadcast receiver 1 in "the simple recording mode." A menu screen can be used to pre-select an external output terminal for connecting the recording means 8. In Fig.1, the external output terminal 5 is selected to connect the recording means 8. Further, the CS digital broadcast receiver 1 is provided with a function to program a recording with the start time specified by the user through the microcomputer 2 based on program information obtained from, for example, an electronic program guide and a function to turn ON and OFF this function. The CS digital broadcast receiver 1 is further provided with a function to select whether or not it corresponds to the simple recording mode.

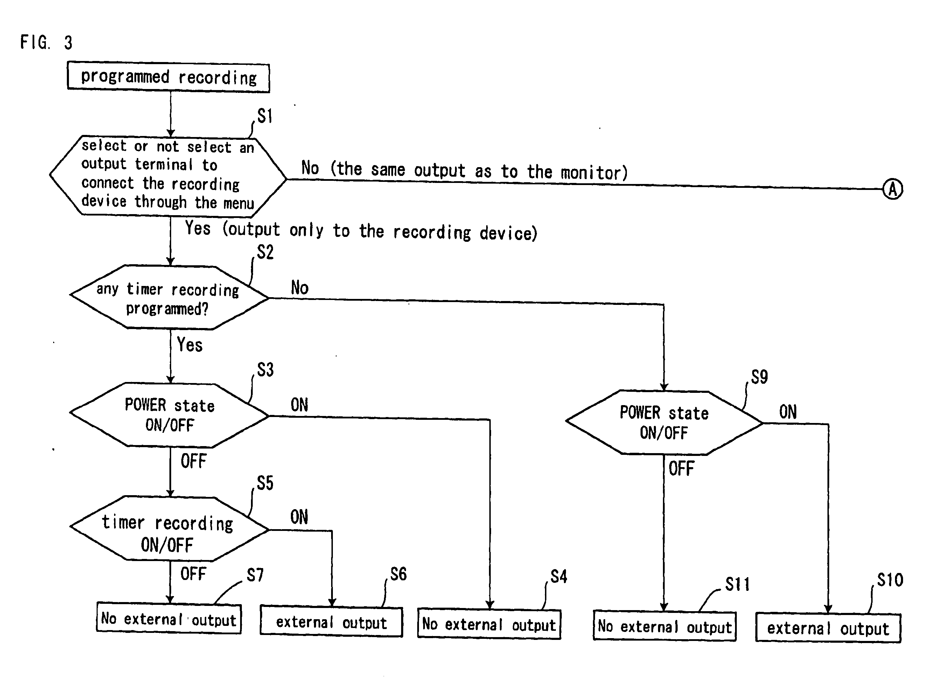

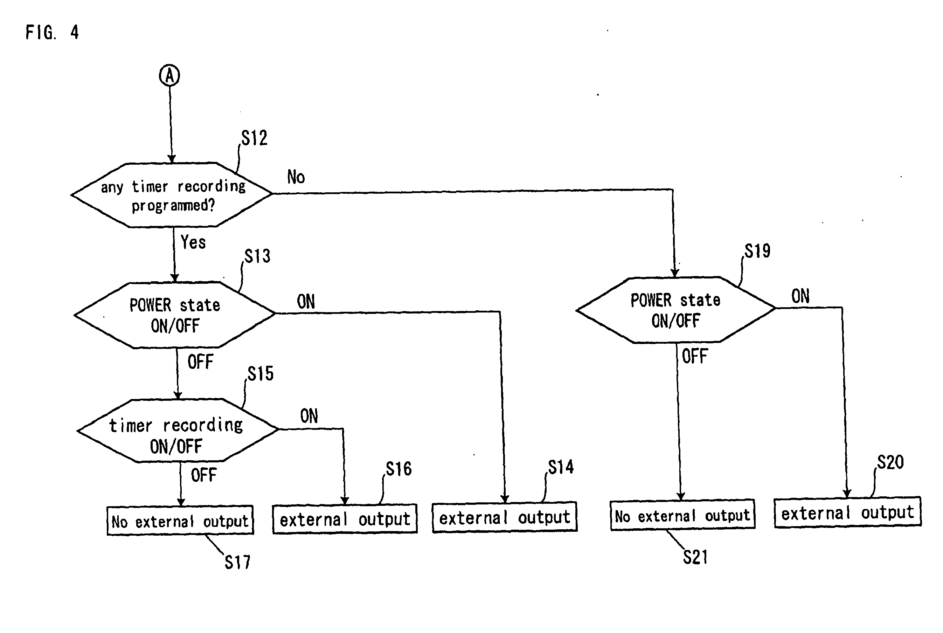

The operation of an embodiment of the present invention having the above construction in association with programming is described hereafter, with reference to the flowcharts of Figs. 3 and 4. First, for programming a recording based on an electronic program guide, any program is selected on a program list data displayed on a monitor screen and the start time, end time, and the selected channel is specified in Step S1. Then, selection is made as to whether or not the recording starts based on the "simple recording mode" of the recording means 8. When selection is made that the recording starts based on the "simple recording mode," audio/video signals from the tuner 3 are supplied to the recording means 8 in association with turning ON the power of the CS digital broadcast receiver 1, whereby a program selected by the tuner 3 is recorded by the recording means 8. On the other hand, when no selection is made of the "simple recording mode", a determination is made as to whether or not an external output terminal to connect the recording means 8 (the terminal 5 in this embodiment) had been selected by the user in Step S1. When the external output terminal 5 is selected, audio/video signals of a program selected by the tuner 3 are supplied, and a determination is made as to whether or not timer recording has been programmed (Step S2) . If so, the CS digital broadcast receiver 1 is monitored for turning ON the power or turning OFF the power until timer recording has been accomplished (Step S3).

In the standby mode for programmed recording, no audio/video signals are supplied from the tuner 3 to the external output terminal 5 connected to the recording means 8 (Step S4), and audio/video signals from the tuner 3 are supplied to the external output terminal 7 connected to the monitor 7. No audio/video signals of a program received by the tuner 3 are supplied to the recording means 8 in "the programmed mode". Therefore, programs received by the tuner 3 are not recorded by the recording means 8 even if the CS digital broadcast receiver 1 is turned ON. Audio/video signals from the tuner 3 are supplied to the external output terminal 4 connected to the monitor 4 even in the standby mode. Therefore, programs received by the tuner 3 can be viewed and channels and broadcasts can be switched over. When timer recording is performed (Step S5), the audio/video signals of a program received by the tuner 3 are supplied to the recording means (Step S6), and audio/video signals of a program received by the tuner 3 are recorded by the recording means 8. When the timer is turned OFF (Step S7), audio/video signals of a program received by the tuner 3 are obviously not supplied to the recording means 8 (Step S7). When timer recording is not programmed (Step S9), audio/video signals of programs received by the tuner 3 are supplied to the recording means 8 in association with turning ON the power of the CS digital receiver 1, by which audio/video signals of programs received by the tuner 3 are recorded by the recording means 8 in the simple recording mode (Step S10). There is no external output when the CS digital broadcast receiver 1 is turned OFF (Step S11).

On the other hand, when the external output terminal 5 is not selected, as shown in Fig.4, audio/video signals from the tuner 3 are supplied to the external output terminal 4 connected to the monitor 7. As with the operation described above, a determination is made as to whether or not timer recording is programmed (Step S12). If it is, the CS digital broadcast receiver 1 is monitored with regard to turning ON the power or turning OFF the power until the timer recording has been performed (Step S13). Audio/video signals from the tuner 3 are not supplied to the external output terminal 5 connected to the recording means 8 in the standby mode for programmed recording (Step S14) . Audio/video signals from the tuner 3 are supplied to the external output terminal 4 connected to the monitor 7. Therefore, the audio/video signals of programs received by the tuner 3 are not supplied to the recording means 8 in "the programmed mode." Accordingly, programs received by the tuner 3 are not recorded by the recording means 8 even if the CS digital broadcast receiver 1 is turned ON. Audio/video signals of programs received by the tuner 3 are supplied to the external output terminal 4 connected to the monitor 7 even in the standby mode. Hence, programs received by the tuner 3 can be viewed and channels and broadcasts can be switched over. When timer recording is performed (Step S15), the audio/video signals of a program received by the tuner 3 are supplied to the recording means 8 (Step S16), and the audio/video signals of a program received by the tuner 3 can be recorded by the recording means 8. When the timer is turned OFF (Step S17), the audio/video signals of a program received by the tuner 3 are obviously not supplied to the recording means 8 (Step S18) . When there is no programmed timer recording (Step S19), audio/video signals of programs received by the tuner 3 are supplied to the recording means 8 in association with turning ON the power of the CS digital broadcast receiver 1, and audio/video signals of programs received by the tuner 3 are recorded by the recording means 8 in the simple recording mode (Step S20). There is no external output when the CS digital broadcast receiver 1 is turned OFF (Step S21). Hence, when audio/video signals from the tuner 3 are supplied to the external output terminal 4 connected to the monitor 7, the mute circuit 6 does not mute and the monitor displays pictures even if a recording is erroneously programmed by the user. It is relatively easy to program a recording based on an electronic program guide. However, erroneous recording of a program is prevented by the recording means 8 even if a recording is mistakenly programmed by the user.

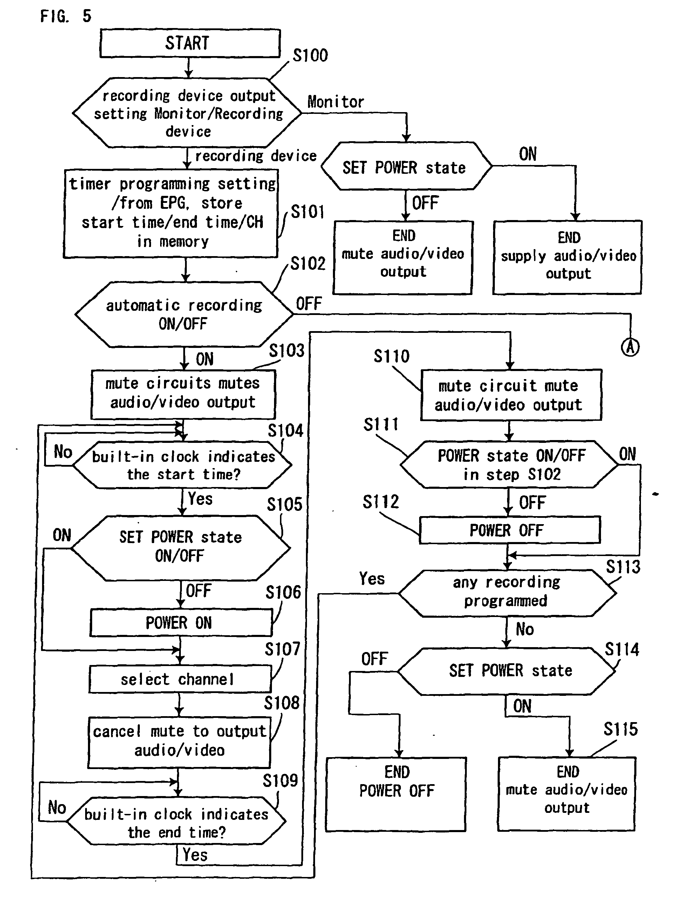

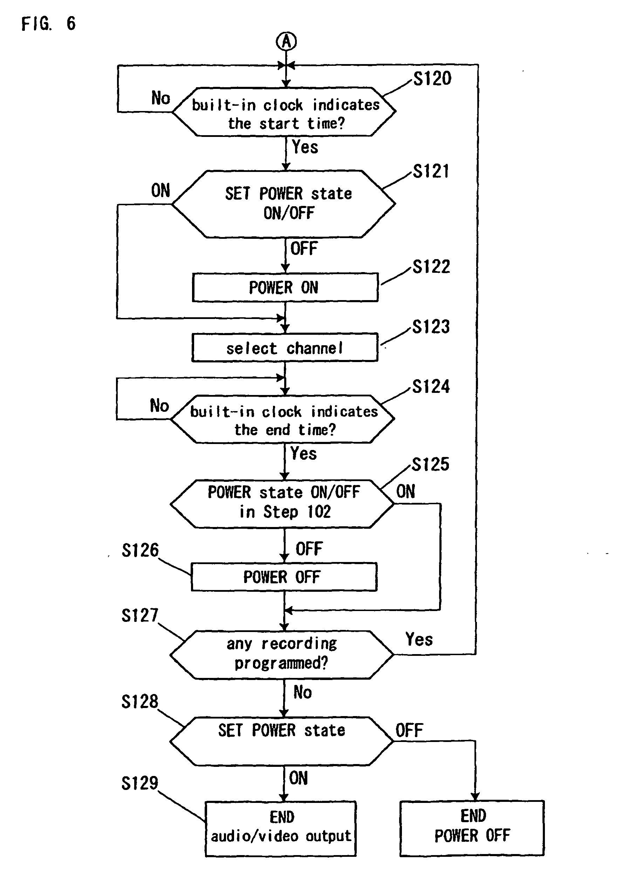

As described above, the present invention is provided with a function to select correspondence or non-correspondence in relation to "simple programming," the operation of which is described hereafter, with reference to Figs. 5 and 6. In flowcharts Figs. 5 and 6, according to the output setting selected by the user (Step S100), the recording starts when the timer recording is programmed by the user (Step S101) . In this instance, a determination is made as to whether or not there is correspondence with "simple programming" i.e. whether or not the recording is activated in association with turning the power of the CS digital broadcast receiver 1 ON or OFF (Steps S101 and S102). When the user selects correspondence with "simple programming", the mute circuit 6 mutes the audio/video signals (Step S103) , initiating the standby mode for programmed recording until the recording start time. When the recording start time is reached (Step S104), the CS digital broadcast receiver 1 is turned ON and the channel programmed by the user is selected (Steps S104, S105, S106, and S107). Mute cancels the supply of audio/video signals (Step S108) for performing programmed recording. When the recording end time is reached (Step S109), the mute circuit 6 mutes the audio/video signals (Step S110). After programmed recording has been completed, the CS digital broadcast receiver 1 is turned OFF in Step 102 (Steps S111 and S112), and a determination is made as to whether or not a recording has been programmed by the user. If so, the operation starting in Step S104 is repeated for recording. After the programmed recording is complete, the mute circuit 6 blocks the output to the external output terminal 5 (S115) even if the power is turned ON for new programming, and a recording is simply programmed without canceling the simple programming of the recording means 8.

When there is no selection of "simple programming" by the user in Step S102, the CS digital broadcast receiver 1 is turned ON at the start time of a recording programmed by the user, the programmed channel is selected, and programmed recording is performed until the end time is reached (Steps S120 to S124). After the completion of the programmed recording, the CS digital broadcast receiver 1 is turned OFF in Step 102 (Steps S125 and S126), and a determination is made as to whether or not a recording has been programmed by the user (Step S127). If it has, the operation starting at Step 120 is repeated. For example, when weekly/daily recordings are programmed and no "simple recording mode" is selected, the mute circuit 6 does not become effective, and current audio/video signals are supplied to the external output terminal 5. Therefore, current audio/video signals can be simply recorded by the recording means 8 without canceling the programmed recordings (Steps S128 and S129).

As described above, in this embodiment, a function to pre-select the external output terminal 5 to connect the recording means 8 is provided, and audio/video signals from the tuner 9 are not supplied to the external output terminal 5 to the recording means in the standby mode for programmed recording. However, they are supplied to the external output terminal 4 connected to monitor 7. In addition, audio/video signals from the tuner 9 are supplied to the external output terminal 5 connected to the recording means 8 at the start time of the programmed recording. Audio/video signals of programs received by the tuner 3 are not supplied to the recording means 8 in the "programmed mode". Therefore, programs received by the tuner 3 are not recorded by the recording means 8, even if the CS digital broadcast receiver 1 is turned ON. Audio/video signals from the tuner 3 are supplied to the external output terminals 4 connected to the monitor 7 even in the standby mode. Therefore, programs received by the tuner 3 can be viewed and channels and broadcasts can be switched over.

Recording is selectively started either based on "the programmed mode" or based on "the simple recording mode" of the recording means 8. For example, when weekly/daily recordings are programmed and no "simple recording mode" is selected, current audio/video signals are supplied to the external output terminals 5 connected to the recording means 8, and current audio/video signals can be recorded by the recording means 8 without canceling the programmed recordings. When "the simple recording mode" is selected, a recording can be simply programmed without canceling the simple programming of the recording means 8 because there is no output to the external output terminal 5 once the programmed recording is complete and the power is turned ON for new programming.

## Claims

1. A CS digital broadcast receiver comprising a tuner for receiving broadcasts signals, multiple external output terminals for supplying audio/video signals from the tuner at least to an external monitor and recording means, and a programming means for specifying the start time and recording audio/video signals received by the tuner, **characterized by** being provided with means to select an external output terminal for pre-connecting the recording means and being composed of a control means to send audio/video signals from the tuner, not to the external output terminal for the recording means, but rather only to the external output terminal for the monitor in the standby mode for programmed recording and to send audio/video signals from the tuner to the external output terminal for the recording means at the start time of the programmed recording.

2. The CS digital broadcast receiver according to Claim 1, **characterized by** the fact that the recording means is provided with a simple recording mode in which audio/video signals supplied from the tuner are recorded in association with turning ON the power of the CS digital broadcast receiver, the CS digital broadcast receiver being provided with a means for selecting whether or not it corresponds to a simple recording mode.

## Patentansprüche

1. CS-Digitalrundfunkempfänger, umfassend einen Tuner zum Empfangen von Rundfunksignalen, Mehrfachaußenausgangsanschlüsse zur Weiterleitung von Audio-Nideosignalen aus dem Tuner zumindest an einen externen Bildschirm und ein Aufzeichnungsmittel sowie ein Programmiermittel zur Spezifizierung des Startzeitpunktes und zur Aufzeichnung von vom Tuner empfangenen Audio-Nideosignalen, **dadurch gekennzeichnet, dass** er mit einem Mittel zur Auswahl eines Außenausgangsanschlusses zum Voranschließen des Aufzeichnungsmittels versehen ist und aus einem Steuermittel gebildet ist, um Audio-Nideosignale aus dem Tuner nicht an den Außenausgangsanschluss für das Aufzeichnungsmittel, sondern ausschließlich an den Außenausgangsanschluss für den Bildschirm im Standbymodus für programmierte Aufzeichnungen zu senden, sowie um Audio-Nideosignale aus dem Tuner an den Außenausgangsanschluss für das Aufzeichnungsmittel zum Startzeitpunkt der programmierten Aufzeichnung zu senden.

2. CS-Digitalrundfunkempfänger nach Anspruch 1, **dadurch gekennzeichnet, dass** das Aufzeichnungsmittel mit einem einfachen Aufzeichnungsmodus versehen ist, bei dem aus dem Tuner bereitgestellte Audio-Nideosignale zusammen mit dem Einschalten des CS-Digitalrundfunkempfängers aufgezeichnet werden, wobei der CS-Digitalrundfunkempfänger mit einem Mittel zur Auswahl versehen ist, ob dieser einem einfachen Aufzeichnungsverfahren entspricht oder nicht.

## Revendications

1. Récepteur de radiodiffusion numérique pour satellite de télécommunications comprenant un syntoniseur pour recevoir des signaux de radiodiffusion, des terminaux de sortie externes multiples pour transmettre des signaux audio/vidéo du syntoniseur au moins à un moniteur et moyen d'enregistrement externes, et un moyen de programmation pour spécifier le temps de départ et pour enregistrer les signaux audio/vidéo reçus par le syntoniseur, **caractérisé en ce qu'**il est pourvu de moyens pour sélectionner un terminal de sortie externe pour la préconnexion du moyen d'enregistrement et étant constitué d'un moyen de commande pour transmettre les signaux audio/vidéo du syntoniseur, non pas au terminal de sortie externe pour le moyen d'enregistrement, mais plutôt seulement au terminal de sortie externe pour le moniteur en mode d'attente d'un enregistrement programmé et pour transmettre les signaux audio/vidéo du syntoniseur au terminal de sortie externe pour le moyen d'enregistrement à l'instant de départ de l'enregistrement programmé.

2. Récepteur de radiodiffusion numérique pour satellite de télécommunications selon la revendication 1, **caractérisé par le fait que** le moyen d'enregistrement présente un mode d'enregistrement simple dans lequel des signaux audio/vidéo fournis par le syntoniseur sont enregistrés en association avec la mise en service de la puissance du récepteur de radiodiffusion numérique pour satellite de télécommunications, le récepteur de radiodiffusion numérique pour satellite de télécommunications présentant un moyen pour sélectionner si oui ou non il correspond à un mode d'enregistrement simple.
